# EUROPEAN PATENT SPECIFICATION

(11) **EP 3 401 135 B1**
(45) Date of publication and mention of the grant of the patent: **08.04.2020**
(21) Application number: 18169858.0
(22) Date of filing: 27.04.2018
(51) Int. Cl.: B60H 1/00

(54) **AIR DISTRIBUTION DEVICE FOR AN AIR CONDITIONING UNIT OF A MOTOR VEHICLE**
LUFTVERTEILUNGSVORRICHTUNG FÜR EINE KLIMAANLAGE EINES KRAFTFAHRZEUGS
DISPOSITIF DE DISTRIBUTION D'AIR POUR UNE UNITÉ DE CLIMATISATION D'UN VÉHICULE AUTOMOBILE

(30) Priority: 03.05.2017 IT 201700047479
(43) Date of publication of application: 14.11.2018
(73) Proprietor: DENSO THERMAL SYSTEMS S.p.A., 10046 Poirino (Torino) (IT)
(72) Inventor: BENEDETTO, Roberto, 10046 Poirino (Torino) (IT); BERGAMO, Luca, 10046 Poirino (Torino) (IT)
(74) Representative: Vanzini, Christian

(56) References cited:
- EP-A1- 1 905 622
- EP-B1- 2 240 338
- JP-U- S5 587 807
- US-A1- 2007 128 999
- US-A1- 2007 204 985

## Description

The present invention relates in general to an air distribution device for an air conditioning unit of a motor vehicle.

More particularly, the invention relates to a device of the type comprising an air inlet chamber suitable to be supplied with an air flow and provided with a lower central outlet and an upper central outlet arranged at a higher level with respect thereto, as well as two lateral outlets arranged on opposite sides of the central outlets and oriented substantially orthogonally to the central outlets, and obstructing and deflecting means for distributing the flow of air to said outlets.

A device of this type conventionally comprises several movable obstructing and deflecting elements to control the air distribution among the different outlets.

In one embodiment, the lower central outlet is adapted to feed a front air vent provided centrally on the vehicle's dashboard, the upper central outlet is adapted to feed a front air vent provided centrally on the vehicle's dashboard at a level higher than the first air vent, and the side outlets are adapted to feed respective foot air vents arranged in the lower part of the vehicle's interior.

An object of the present invention is to provide a distribution device which is relatively simpler than those of the prior art, wherein the number of moving parts to be controlled is as small as possible.

US 2007/128999 A1 discloses a drum-type distribution flap comprising a partial cylindrical surface and two circular segment surfaces. US 2007/204985 A1 discloses a drum-type distribution flap with lateral air guides. EP 2 240 338 B1 discloses a drum-type distribution flap with a central air passage. EP 1 905 622 A1 discloses a drum-type distribution flap with a flat central part. JP S55 87807 U discloses a distribution flap with lateral air guides.

Object of the invention is a device of the type defined at the beginning, wherein the obstructing and deflecting means comprise a flap to control the distribution of the air flow to the central outlets and the side outlets, said flap comprising two flat and coplanar side flap portions, and a central flap portion that interconnects the two side flap portions forming a single, continuous surface,
wherein the flap is hinged about a rotation axis parallel to a plane defined by the side flap portions, and staggered with respect thereto,
wherein the central flap portion comprises a rostrum part with a V-shaped cross section, defining on opposite faces of the flap a recess and a relief, respectively, wherein the recess of the rostrum part has an edge at least partially extending in a plane that is inclined in the direction of rotation of the flap with respect to the plane defined by the side flap portions and wherein the relief of the rostrum part has a ridge extending in a plane that is inclined in the direction of rotation of the flap with respect to the plane defined by the side flap portions;
wherein the flap is movable between a first terminal position in which both central apertures are closed by the flap and the rostrum part of the flap is capable of deflecting the air flow towards the side apertures, and a second terminal position in which the central apertures are open.

According to the invention, with a single flap it is possible to close both the central aperture and the upper side apertures. Moreover, the rostrum part of the flap allows the air flow to be guided towards the lower side apertures, in particular when the flap is in the closed position. Since the outlet may be controlled with a single flap, the kinematics required to control the air distribution are simplified considerably.

Further features and advantages of the device according to the invention will become more apparent in the following detailed description of an embodiment of the invention, made with reference to the accompanying drawings, provided purely to be illustrative and non-limiting, wherein
figures 1 and 2 are cutaway views of a part of an air conditioning unit provided with an air distribution device according to the invention, in a first operating position;
figures 3 and 4 are cutaway views of a part of an air conditioning unit provided with an air distribution device according to the invention, in a second operating position;
figures 5 and 6 are perspective views of a flap of the device of figures 1-4; and
figure 7 is a side elevational view of the flap of figures 5 and 6.

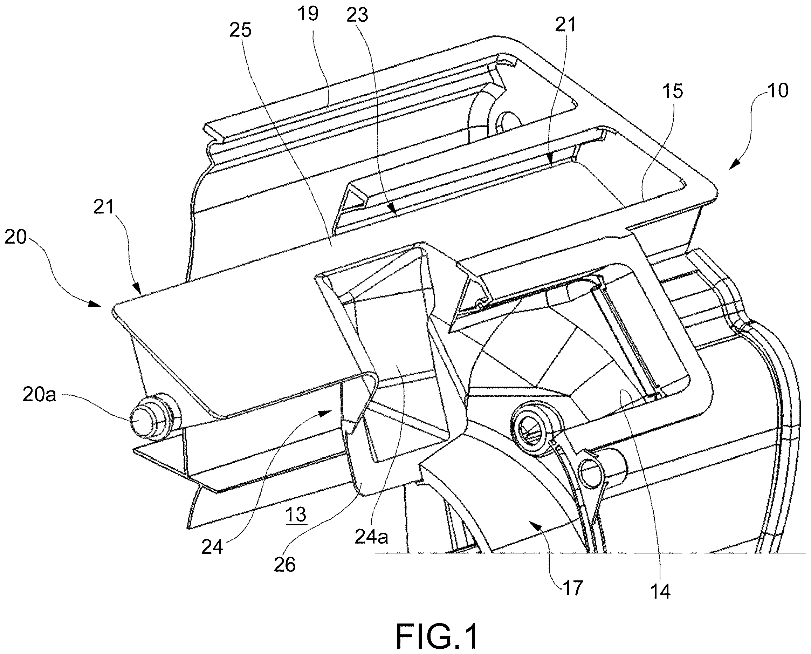

Figures 1 to 4 represent a part of the casing of an air conditioning unit for a motor vehicle, indicated collectively at 10.

Such casing 10 is made of plastic material and is conventionally configured in such a way as to have therein a set of passages for an air flow to be treated and introduced into the passenger compartment of a motor vehicle.

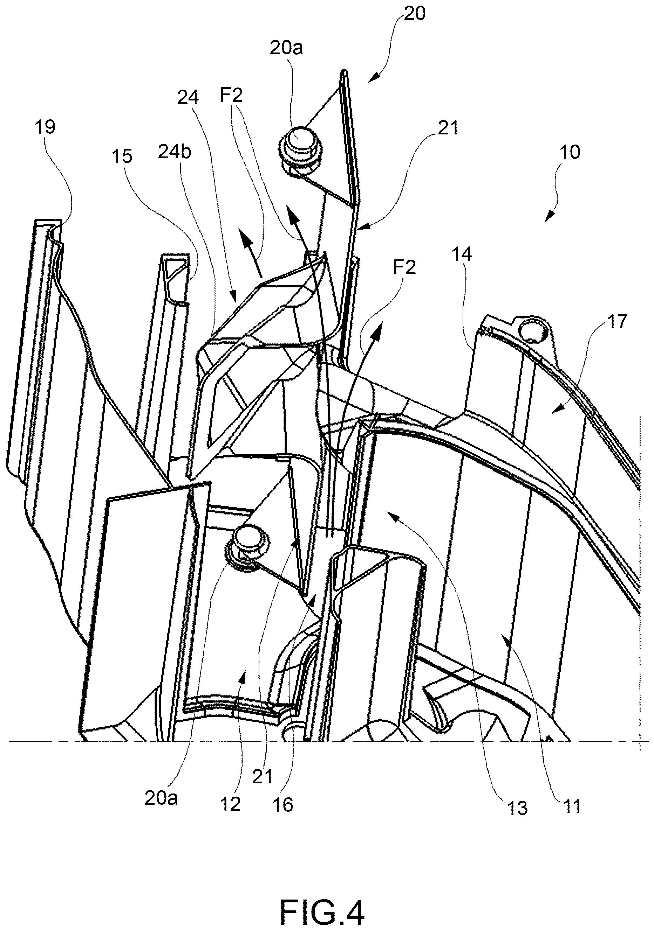

In particular, in figure 4, a hot air passage 11 and a cold air passage 12 may be identified. Conventionally, the hot air passage 11 comes from an area (not shown) of the air conditioning unit wherein a heating device is located, while the cold air passage 12 comes from an area (not shown) of the air conditioning unit without a heater device.

The hot air passage 11 and the cold air passage 12 converge into one air inlet chamber 13, inside of which hot air and cold air may be mixed.

The air inlet chamber 13 communicates with the outside of the air conditioning unit through a plurality of apertures, comprising a lower central outlet 14 and an upper central outlet 15, arranged at a higher level with respect thereto, as well as two side outlets 16 (only one of which is visible in the figures) arranged on opposite sides of the central outlets 14 and 15 and oriented orthogonally to the central outlets 14, 15.

In one embodiment, the lower central outlet 14 is adapted to feed a front air vent (not shown) provided centrally on the vehicle's dashboard, the upper central outlet 15 is adapted to feed a front air vent (not shown) provided centrally on the vehicle's dashboard at a higher level than the first air vent, and the lower side outlets 16 are adapted to feed respective foot air vents (not shown) arranged in the lower part of the vehicle's interior.

In the figures, a central air distribution passage 17 is also visible, also communicating with the air inlet chamber 13 and adapted to be connected to a further central air distribution outlet (not shown).

The figures also show a further central outlet 19 communicating with the air inlet chamber 13 and typically provided for the defogging and defrosting of the windscreen, the presence of which is however irrelevant for the purposes of the present invention.

The device further comprises a flap 20 made of plastic material for controlling the distribution of the air flow to the central outlets 14, 15 and to the side outlets 16, as well as to the central passage 17.

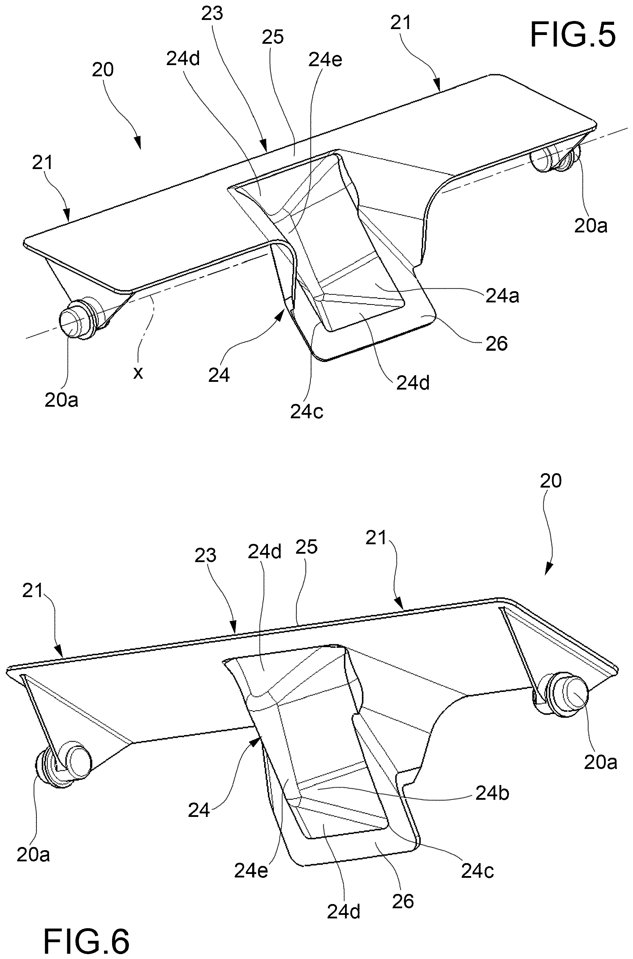

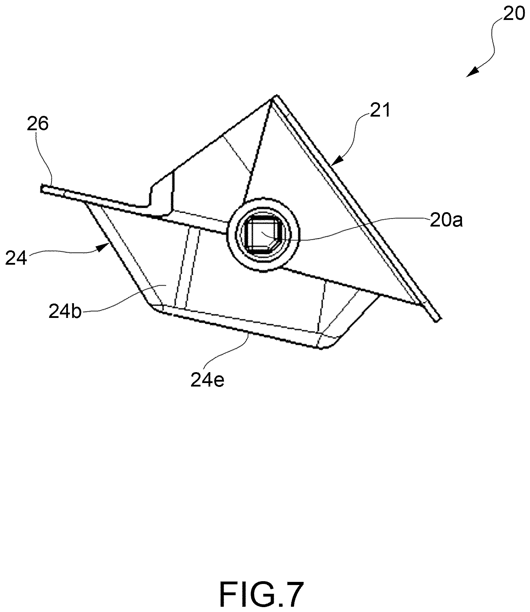

With reference in particular to the figures 5 to 7, the flap 20 comprises two flat and coplanar side flap portions 21, and a central flap portion 23, which interconnects the two side flap portions 21, forming a single, continuous surface.

The flap 20 is hinged to the casing 10 of the air conditioning unit about a rotation axis x defined by pins 20a formed integrally with the body of the flap 20. Such rotation axis x is parallel to a plane defined by the side flap portions 21 and staggered with respect thereto.

The central flap portion 23 comprises a rostrum portion 24 having a V-shaped cross section defining on opposite faces of the flap 20 respectively a recess 24a and a relief 24b. The recess 24a of the rostrum part 24 has an edge 24c at least partly extending on a plane that is inclined in the direction of rotation of the flap 20, with respect to the plane defined by the side flap portions 21. The recess 24a of the rostrum part 24 is closed at the opposite ends by wall portions 24d. The relief 24b of the rostrum part 24 has a ridge 24e extending on a plane that is inclined in the direction of rotation of the flap with respect to the plane defined by the side flap portions 21.

The central flap portion 23 further comprises a flat and coplanar connecting part 25 with the side flap portions 21. The rostrum part 24 is laterally connected to the side flap portions 21 and is at one end connected to the connecting part 25.

The central flap portion 23 comprises a flange part 26, which surrounds at least part of the edge 24c of the recess 24a of the rostrum portion 24. Such flange part 26 extends on a plane that is inclined in the direction of rotation of the flap, with respect to the plane defined by the side flap portions 21.

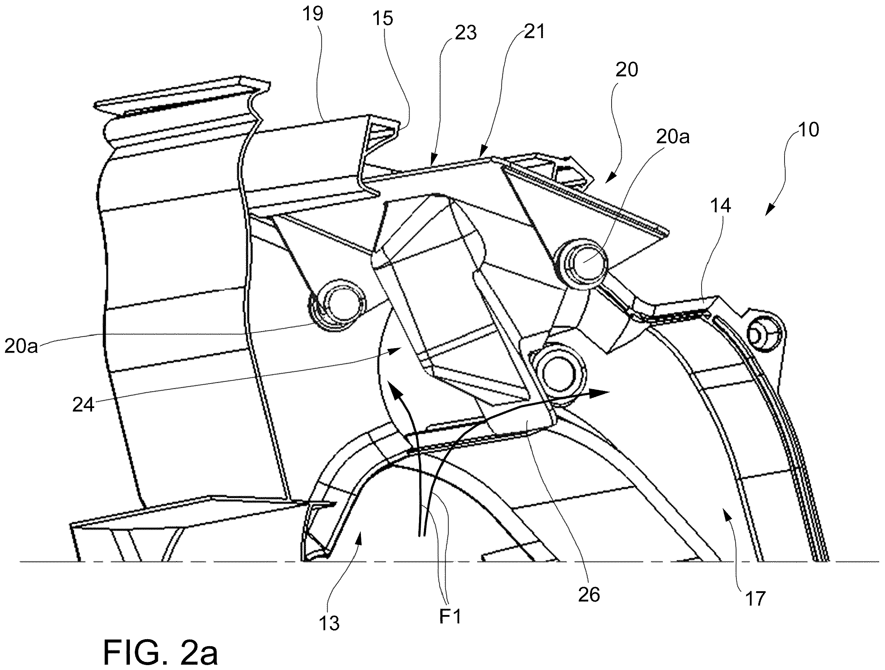

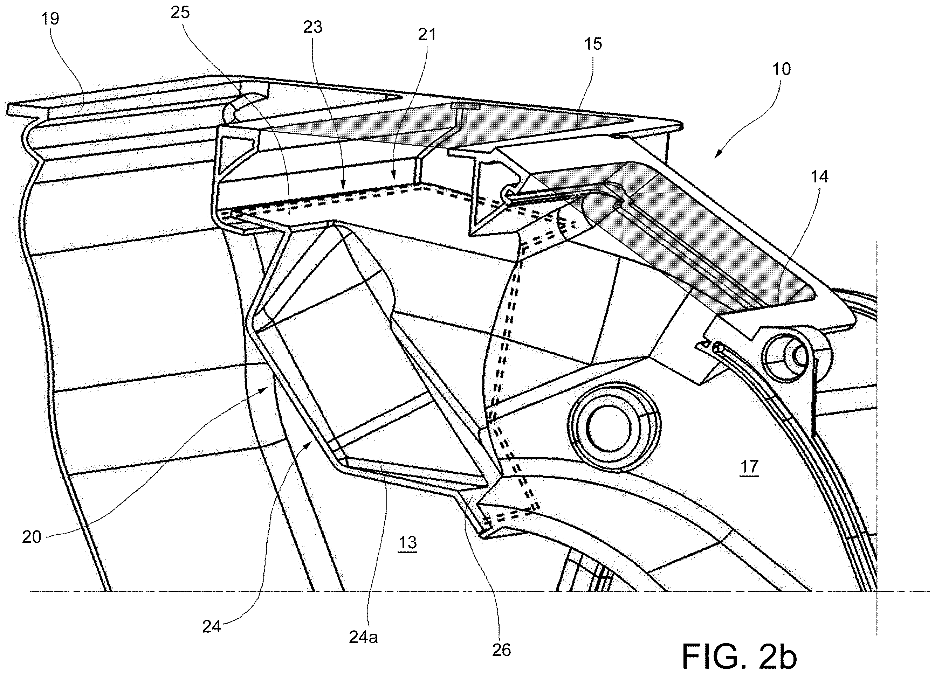

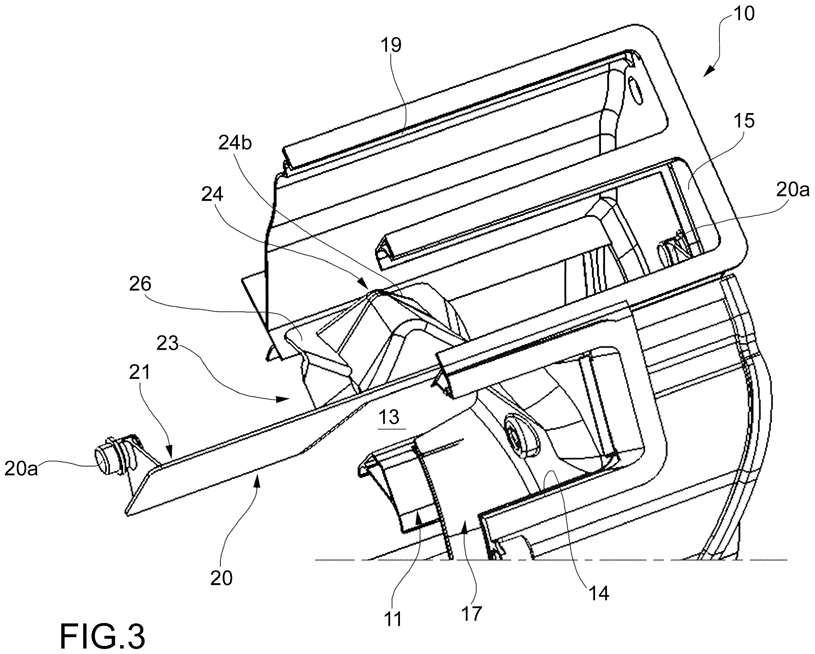

As can be seen in figures 1 to 4, the flap 20 can be moved between a first terminal position in which the central openings 14 and 15 are both closed by the flap 20 (shown in figures 1, 2a and 2b), and a second terminal position in which the central apertures 14 and 15 are open (shown in figures 3 and 4). In the first terminal position, the edges of the flap (i.e. the edges of the side flap portions 21, the connecting part 25 and the flange part 26 of the central flap portion 23, as well as the edges of the walls connecting the rostrum portion 24 and the flange part 26 to the side flap portions) fit together with the three-dimensional margin (represented collectively by the double dashed line in figure 2b) of a passage section between the air inlet chamber 13 and the central apertures 14 and 15 (represented by the gray areas in figure 2b). In this position (figure 2a), the rostrum part 24 of the flap 20 deflects the flow of air coming from the hot air passage 11 and/or the cold air passage 12 towards the side apertures 16 (as indicated by the arrows F1 in figure 2a). In the second terminal position (figures 3 and 4) the air flow is instead mainly directed towards the central apertures 14 and 15 (as indicated by the arrows F2 in figure 4).

It is understood that the invention is not limited to the embodiments described and illustrated here, but rather may undergo modifications relating to the shape and arrangement of parts, construction and operating details, according to the numerous possible variants which will appear suitable to persons skilled in the art and which are to be understood as included in the scope of the invention, as defined by the following claims.

## Claims

1. An air distribution device for an air conditioning unit of a motor vehicle, comprising an air inlet chamber (13) to be supplied with an air flow and provided with a lower central outlet (14) and an upper central outlet (15) arranged at a level higher than the lower central outlet, as well as two side outlets (16) arranged on opposite sides of the central outlets (14, 15) and oriented substantially orthogonally to the central outlets (14, 15), and obstructing and deflecting means for distributing the air flow to said outlets;
**characterized in that** said obstructing and deflecting means comprise a flap (20) for controlling the distribution of the air flow to the central outlets (14, 15) and to the side outlets (16), said flap comprising two flat, coplanar side flap portions (21), and a central flap portion (23) that interconnects the two side flap portions (21) forming a single, continuous surface,
wherein the flap (20) is hinged about a rotation axis (x) parallel to a plane defined by the side flap portions (21), and staggered with respect thereto,
wherein the central flap portion (23) comprises a rostrum part (24) with a V-shaped cross section, defining on opposite faces of the flap (20) a recess (24a) and a relief (24b), respectively, wherein the recess (24a) of the rostrum part (24) has an edge (24c) at least partially extending in a plane that is inclined in the direction of rotation of the flap (20) with respect to the plane defined by the side flap portions (21), and wherein the relief (24b) of the rostrum part (24) has a ridge (24e) extending in a plane that is inclined in the direction of rotation of the flap (20) with respect to the plane defined by the side flap portions (21);
wherein the flap (20) is movable between a first terminal position, in which both central apertures (14, 15) are closed by the flap (20) and the rostrum part (24) of the flap (20) is capable of deflecting the air flow towards the side apertures (16), and a second terminal position, in which the central apertures (14, 15) are open.

2. A device according to claim 1, wherein the central flap portion (23) comprises a connection part (25), flat and coplanar with the side flap portions (21), the rostrum part (24) being laterally joined to the side flap portions (21) and being joined at an end to the connection part (25).

3. A device according to claim 1 or 2, wherein the recess (24b) of the rostrum part (24) is on opposite ends closed by wall portions (24d).

4. A device according to claim 3, wherein the central flap portion (23) comprises a flange part (26) that surrounds at least part of the edge (24c) of the recess (24a) of the rostrum part (24), said flange part (26) extending in a plane that is inclined in the direction of rotation of the flap (20) with respect to the plane defined by the side flap portions (21).

## Patentansprüche

1. Luftverteilungsvorrichtung für eine Klimaanlageneinheit eines Kraftfahrzeugs, umfassend eine Lufteinlasskammer (13), die mit einem Luftstrom bzw. Luftfluss zu speisen ist und die einen unteren zentralen Auslass (14) und einen oberen zentralen Auslass (15), der auf einer Ebenehöher als der untere zentrale Auslass angeordnet ist, sowie zwei seitliche Auslässe (16) aufweist, die an gegenüberliegenden Seiten der zentralen Auslässe (14, 15) angeordnet und im Wesentlichen orthogonal zu den zentralen Auslässen (14, 15) orientiert sind, und Verschluss- bzw. Blockier- und Ablenkmittel zum Verteilen des Luftstroms zu den Auslässen;
**dadurch gekennzeichnet, dass** die Blockier- und Ablenkmittel eine Klappe (20) zum Steuern bzw. Regeln der Verteilung des Luftstroms zu den zentralen Auslässen (14, 15) und zu den seitlichen Auslässen (16) umfassen, wobei die Klappe zwei flache, komplanare, seitliche Klappenabschnitte (21) und einen zentralen Klappenabschnitt (23) umfasst, der die zwei seitlichen Klappenabschnitte (21) verbinden, und zwar eine einzige, kontinuierliche Fläche bzw. Oberfläche bildend,
wobei die Klappe (20) um eine Drehachse (x) parallel zu einer von den seitlichen Klappenabschnitten (21) definierten Ebene angelenkt und im Bezug darauf gestaffelt bzw. versetzt ist,
wobei der zentrale Klappenabschnitt (23) ein Treppen- bzw. Podestteil (24) mit einem V-förmigen Querschnitt umfasst, der auf gegenüberliegenden bzw. entgegengesetzten Flächen der Klappe (20) eine Aussparung (24a) bzw. ein Relief (24b) definiert, wobei die Aussparung (24a) des Treppen- bzw. Podestteils (24) eine Kante (24c) aufweist, die sich zumindest teilweise in einer Ebene erstreckt, die in der Drehrichtung der Klappe (20) in Bezug auf die von den seitlichen Klappenabschnitten (21) definierte Ebene geneigt ist, und wobei das Relief (24b) des Treppen- bzw. Podestteils (24) eine Rippe bzw. Kante bzw. Grat (24e) aufweist, die bzw. der sich in einer Ebene erstreckt, die in der Drehrichtung der Klappe (20) in Bezug auf die von den seitlichen Klappenabschnitten (21) definierte Ebene geneigt ist;
wobei die Klappe (20) zwischen einer ersten Endposition, in der beide zentralen Öffnungen (14, 15) durch die Klappe (20) geschlossen sind, und der Treppen- bzw. Podestteil (24) der Klappe fähig ist, den Luftstrom zu den seitlichen Öffnungen (16) hin abzulenken, und einer zweiten Endposition bewegbar ist, in der die zentralen Öffnungen (14, 15) offen sind.

2. Vorrichtung nach Anspruch 1, wobei der zentrale Klappenabschnitt (23) ein Verbindungsteil (25) umfasst, und zwar flach und komplanar mit den seitlichen Klappenabschnitten (21), wobei das Treppen- bzw. Podestteil (24) lateral mit den seitlichen Klappenabschnitten (21) verbunden und mit einem Ende mit dem Verbindungsteil (25) verbunden ist.

3. Vorrichtung nach Anspruch 1 oder 2, wobei die Aussparung (24b) des Treppen- bzw. Podestteils (24) auf gegenüberliegenden bzw. entgegengesetzten Enden durch Wandabschnitte (24d) abgeschlossen ist.

4. Vorrichtung nach Anspruch 3, wobei der zentrale Klappenabschnitt (23) ein Flanschteil (26) umfasst, das zumindest einen Teil der Kante (24c) der Aussparung (24a) des Treppen- bzw. Podestteils (24) umgibt, wobei sich das Flanschteil (26) in einer Ebene erstreckt, die in der Drehrichtung der Klappe (20) in Bezug auf die von den seitlichen Klappenabschnitten (21) definierte Ebene geneigt ist.

## Revendications

1. Dispositif de distribution d'air pour unité de climatisation d'un véhicule à moteur, comprenant une chambre d'admission d'air (13) à alimenter avec un flux d'air et munie d'une sortie centrale inférieure (14) et d'une sortie centrale supérieure (15) agencée à un niveau plus haut que la sortie centrale inférieure, ainsi que deux sorties latérales (16) agencées sur des côtés opposés des sorties centrales (14, 15) et orientées de manière sensiblement orthogonale par rapport aux sorties centrales (14, 15), et des moyens d'obstruction et de déflection pour distribuer le flux d'air vers lesdites sorties ;
**caractérisé en ce que** lesdits moyens d'obstruction et de déflection comprennent un volet (20) pour commander la distribution du flux d'air vers les sorties centrales (14, 15) et vers les sorties latérales (16), ledit volet comprenant deux portions de volet latérales coplanaires plates (21), et une portion de volet centrale (23) qui raccorde entre elles les deux portions de volet latérales (21) en formant une surface continue unique,
dans lequel le volet (20) est articulé autour d'un axe de rotation (x) parallèle à un plan défini par les portions de volet latérales (21), et en quinconce vis-à-vis de celles-ci,
dans lequel la portion de volet centrale (23) comprend une partie en rostre (24) avec une section en forme de V, définissant sur des faces opposées du volet (20) un évidement (24a) et un relief (24b), respectivement, dans lequel l'évidement (24a) de la partie en rostre (24) présente un bord (24c) s'étendant au moins partiellement en un plan qui est incliné dans le sens de rotation du volet (20) vis-à-vis du plan défini par les portions de volet latérales (21), et dans lequel le relief (24b) de la partie en rostre (24) présente une crête (24e) s'étendant dans un plan qui est incliné dans le sens de rotation du volet (20) vis-à-vis du plan défini par les portions de volet latérales (21) ;
dans lequel le volet (20) est mobile entre une première position terminale, dans laquelle les deux ouvertures centrales (14, 15) sont fermées par le volet (20) et la partie en rostre (24) du volet (20) est capable de dévier le flux d'air vers les ouvertures latérales (16), et une seconde position terminale dans laquelle les ouvertures centrales (14, 15) sont ouvertes.

2. Dispositif selon la revendication 1, dans lequel la portion de volet centrale (23) comprend une partie de raccordement (25), plate et coplanaire avec les portions de volet latérales (21), la partie en rostre (24) étant jointe latéralement aux portions de volet latérales (21) et étant jointe à une extrémité à la partie de raccordement (25).

3. Dispositif selon la revendication 1 ou 2, dans lequel l'évidement (24b) de la partie en rostre (24) se trouve sur des extrémités opposées fermées par des portions de paroi (24d).

4. Dispositif selon la revendication 3, dans lequel la portion de volet centrale (23) comprend une partie de bride (26) qui entoure au moins partiellement le bord (24c) de l'évidement (24a) de la partie en rostre (24), ladite partie de bride (26) s'étendant dans un plan qui est incliné dans le sens de rotation du volet (20) vis-à-vis du plan défini par les portions de volet latérales (21).
